# EUROPEAN PATENT APPLICATION

(11) **EP 0 880 210 A1**
(43) Date of publication of application: **25.11.1998**
(21) Application number: 97303549.6
(22) Date of filing: 23.05.1997
(51) Int. Cl.: H02G 3/22

(54) **Sealing of a wire harness in a grommet**

(71) Applicant: SUMITOMO WIRING SYSTEMS, LTD., Yokkaichi City Mie 510 (JP)
(72) Inventor: Fujishita, Mikio, Yokkaichi City, Mie 510 (JP); Kato, Takahiro, Yokkaichi City, Mie 510 (JP)
(74) Representative: Paget, Hugh Charles Edward

(57) **Abstract**

A hardenable sealing agent (10) is used to fill gaps between wires (w) or groups of wires of a wire harness (W/H) and gaps between the wires or groups of wires and an interior surface of a grommet (1) into which the wires are inserted. The sealing agent is composed of two liquids which on mixing undergo reactive hardening. The two liquids are a first liquid consisting essentially of a main reactive agent, at least one viscosity depressant and at least one hardening accelerator, and a second liquid consisting essentially of a hardening agent which reacts with said main reactive agent to effect the reactive hardening. The two liquids when mixed have initially a viscosity in the range 0.2 - 0.5 Pa.s (200 - 500 cps) and gel in 3 to 7 minutes. A spacer may be provided inside the grommet to hold the wires, or groups of wires, spaced apart before the sealing agent hardens.

## Description

The present invention relates to the sealing of an electrical wire harness in an elastomeric grommet, for example a wire harness for use in a motor vehicle. More particularly the invention relates to a hardenable sealing agent for use in sealing the wires of the harness in the grommet, to a method of sealing a wire harness in a grommet, and to sealing constructions of a wire harness in a grommet.

JP-A-1-58223 and JP-A-221468 illustrate prior proposals for sealing of wires in a grommet.

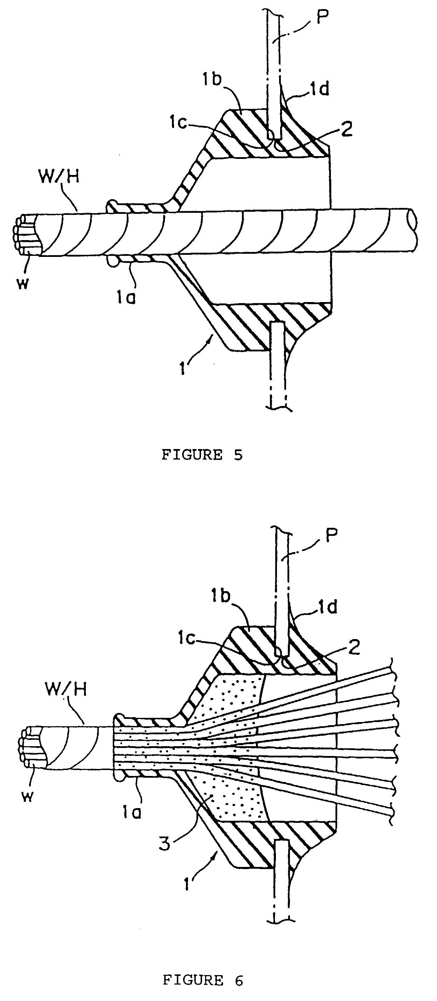

In this conventional practice, as shown in Fig. 5 of the present application, in placing a wire harness W/H in position penetrating through a through-hole 2 formed on a car body panel, the following operations are performed. An operator inserts the wire harness W/H into a grommet 1 made of rubber to bring it into close contact with a small-diameter section 1a of the grommet 1, fits an engaging groove 1c formed on the peripheral surface of a large-diameter section 1b of the grommet 1 into the peripheral wall of the through-hole 2 of the car body panel, and brings a lip 1d formed on the grommet 1 into close contact with the car body panel. In this manner, the operator seals the wire harness to the panel P.

At the entry of the wire harness W/H into the engine room of the vehicle, it is necessary to waterproof the wire harness to prevent passage of water along the harness from the engine room. To this end, referring to Fig. 6, inside the grommet, electric wires constituting the wire harness W/H are in practice not tied into a bundle with a tape (as in Fig. 5) but are separated from each other. In this state, a sealing agent 3 is injected at the large-diameter section 1b of the grommet 1 into the gaps between the adjacent electric wires and the gaps between the electric wires and the inner peripheral surface of the grommet 1.

The above-described conventional practice has, however, a problem that the sealing agent 3 is incapable of penetrating readily into all the gaps, because the gaps between the adjacent electric wires are small and in addition the viscosity of the conventional sealing agent 3 is as high as 1 - 3 Pa.s (1000 - 2000 cps).

The aim of the present invention is to avoid or reduce the above-described problem. It is accordingly one object of the present invention to provide a sealing agent for use in a wire harness which fills the gaps well, and can be practically used.

The present invention in one aspect provides a hardenable sealing agent for use in filling gaps between wires (w) or groups of wires of a wire harness and gaps between said wires or groups of wires and an interior surface of a grommet into which the wires are inserted,
characterized in that said sealing agent is composed of two liquids which on mixing undergo reactive hardening, said two liquids being
a first liquid comprising a main reactive agent, at least one viscosity depressant and at least one hardening accelerator, and
a second liquid consisting essentially of a hardening agent which reacts with said main reactive agent to effect the reactive hardening,
   said two liquids when mixed having initially a viscosity in the range 0.2 - 0.5 Pa.s (200 - 500 cps) and gelling in 3 to 7 minutes.

The invention further provides a method of sealing an electrical wire harness in an elastomeric grommet, comprising introducing a hardenable sealing agent in liquid form into said grommet so as to fill spaces in said grommet between wires, or groups of wires, of said wire harness and between said wires, or groups of wires, and an interior surface of said grommet, and allowing said sealing agent to undergo reactive hardening in situ,
characterized in that said sealing agent is obtained by mixing two liquids which on mixing undergo reactive hardening, said two liquids being
a first liquid comprising a main reactive agent, at least one viscosity depressant and at least one hardening accelerator, and
a second liquid consisting essentially of a hardening agent which reacts with said main reactive agent to effect the reactive hardening,
   said two liquids when introduced into the grommet having initially a viscosity in the range 0.2 - 0.5 Pa.S (200 - 500 cps) and gelling in 3 to 7 minutes.

In this invention, in order to waterproof the wire harness reliably, the sealing agent has a high degree of penetration performance in filling into gaps between wires or groups of electric wires of the wire harness inserted into the grommet. Further, the sealing agent hardens in a short period of time to accomplish a waterproof operation with high efficiency It has been found that in practice the sealing agent does not flow downward along the wires from the grommet region of the wire harness due to the rapid gelling. A further advantage is reduction of the time of the sealing operation.

The sealing agent used in the present invention has a viscosity in the range of 0.2 - 0.5 Pa.s (200 - 500 cps) on initial mixing and on introduction by injection or pouring into the sealing location. More favourably, the viscosity of the sealing agent is about 0.3 Pa.s (300 cps). In this case, the viscosity of the sealing agent is about 1/3 - 1/6 of that of the conventional sealing agent mentioned above. Thus, the sealing agent used in the present invention has a higher degree of flowability than the conventional one. Therefore, the sealing agent is capable of sufficiently penetrating into gaps between adjacent electric wires or groups of wires and gaps between the electric wires or groups of wires and the inner peripheral surface of the grommet. The gelling time period is in the range three to seven minutes. Particularly, it may be about five minutes. Thus, the sealing agent gels before it flows downward much or at all from the grommet. Thus, the possibility that the sealing agent flows downward from the region which should be filled with the sealing agent is minimized. As is conventional, gelling time is the time until the sealing agent mixture loses its ability to flow, i.e. ceases to be a flowable liquid.

Preferably the bundle of the electric wires below the grommet-installing region is tightened e.g. by means of a tape wound around it, to minimize the gaps between the electric wires.

The sealing agent used in the invention as described above has a low viscosity and a high flowability, thus penetrating sufficiently into narrow gaps between the adjacent groups of the electric wires without widening the gaps. Desirably, to ensure that the gaps are fully filled with the sealing agent, the spacer is installed in the grommet, thus achieving secure waterproofing of the wire harness. For the same purpose, and to minimize flow of the sealant from the sealing region, the tape is wound around the small diameter portion of the grommet and the wires projecting therefrom.

The invention also consists in a sealing construction of a wire harness and a grommet, formed using the sealing agent of the invention.

These and other optional features and advantages of the present invention will become clear from the following description of the embodiments thereof given with reference to the accompanying drawings. In the drawings, like parts are designated by like reference numerals.
Fig. 1 is a sectional view showing a sealing construction of a wire harness at a grommet in an aperture in a car body panel, constituting a first embodiment of the invention;
Fig. 2 is a sectional view showing a sealing construction of a wire harness at a grommet constituting a second embodiment of the invention;
Fig. 3 (A) is a perspective view showing a spacer used in the second embodiment of Fig. 2;
Fig. 3 (B) is a front view showing the spacer of Fig. 3 (A) on which electric wires have been mounted;
Fig. 4 is a front view showing an alternative spacer which can be used in the invention and on which electric wires have been mounted;
Fig. 5 is a sectional view showing an example of a conventional sealing construction of a wire harness at a grommet; and
Fig. 6 is a sectional view showing another example of a conventional sealing construction of a wire harness at a grommet.

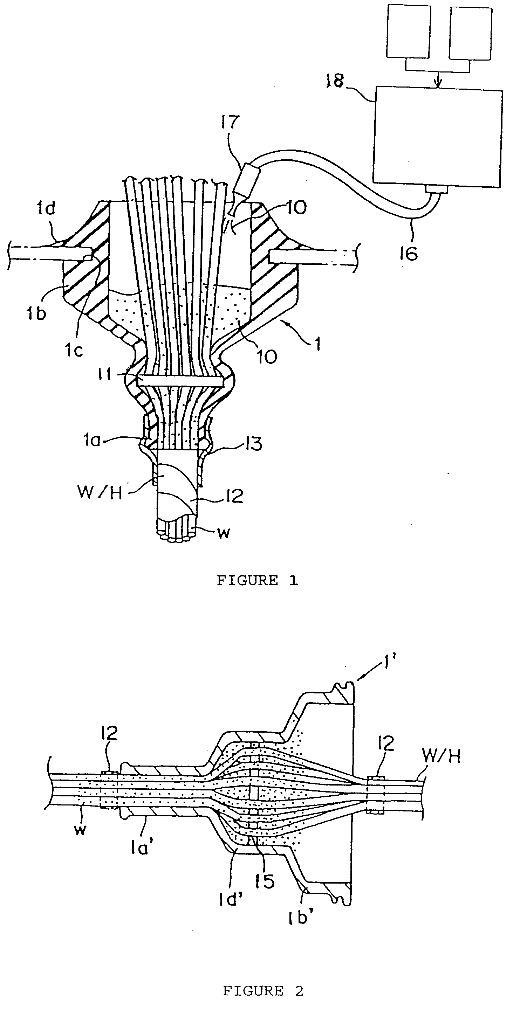

In the first embodiment of the present invention shown in Fig. 1, the grommet 1 has a shape similar to that of the conventional one shown in Fig. 5. The position of the car body panel P when the grommet 1 is mounted in it is indicated. However the sealing operation described below is performed before mounting of the harness in the car body. A large number of electric wires w constituting the wire harness W/H is inserted into a small-diameter cylindrical section 1a of the grommet 1 made of rubber by bringing the small-diameter cylindrical section 1a of the grommet into close contact with the periphery of the bundle of electric wires, a tape 12 being tightly wound around the part of the groups of electric wires positioned in the vicinity of the lower end of the small-diameter cylindrical section 1a so that gaps between the adjacent groups of the electric wires are narrowed to a possible smallest extent. As Fig. 1 shows, a tape 13 is then wound tightly on the small diameter portion 1a of the grommet and the adjacent protruding portion of the wires, to locate the grommet at the desired position. Also, to improve sealing and location of the grommet, a spacer 11 is located on the wires within the small diameter portion 1a, to provide gaps between the lines in that region.

As shown in Fig. 1, a sealing agent 10 is injected into the grommet 1 through the opening of the large-diameter section 1b, and partially flows downward from the large-diameter section 1b to the small-diameter cylindrical section 1a. Because the bundle of the electric wires at the lower part of the grommet 1 is tightened with the tape 12 and because of the gelling time of the sealing agent, the sealing agent 10 can in practice be prevented from significantly flowing downward from the lower-part of the grommet 1.

The sealing agent 10 is a two-liquid reactive hardening agent consisting of a first liquid having a main reactive agent and a second liquid which is a hardening agent. The main reactive agent is mixed with viscosity depressants and a hardening accelerator in predetermined amounts. The viscosity of the sealing agent 10 on initial mixing is 0.2 - 0.5 Pa.s (200 - 500 cps), preferably 0.3 Pa.s (300 cps). The gelling time period is three - seven minutes, preferably five minutes. The complete hardening period of time of the sealing agent 10 is 10 minutes.

The mixing weight ratio between the main reactive agent and the hardening agent is in the range of 5.5 : 1 - 1 : 1, preferably 4 : 1. The first liquid has the main reactive agent which consists of polyether polyol; triethanolamine (acting as catalyst) and dibutyltin dilaurate (acting as gelling agent) both used as hardening accelerators; and a low-molecular weight aromatic hydrocarbon used as the viscosity depressant. The main agent also contains an anti-oxidant. The second liquid is the hardening agent which consists of polyisocyanate. The components may be chosen to achieve a desired degree of cross-linking.

The polyether polyol may be of the formula: 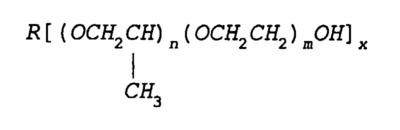 where m, n and x are selected so that the molecular weight is 1000-4000. m or n may be zero. R may be alkyl.

In one example, the mixing wt% of each component of the first liquid is as shown in table 1.

**Table 1**

| Component | Wt% |
|---|---|
| Polyether polyol | 73.0 |
| Triethanolamine (hardening accelerator) | 0.6 |
| Dibutyltin dilaurate (hardening accelerator) | 0.7 |
| Low-molecular weight aromatic hydrocarbon (viscosity depressant) | 25.0 |
| Anti-oxidant | 0.7 |

The two liquids are mixed with each other in a mixing tank 18 immediately before the mixture is injected into the grommet 1 from a nozzle 17 through a pipe 16.

While the sealing agent 10 injected into the grommet 1 is flowing downward to the small-diameter cylindrical section 1a from the large-diameter section 1b of the grommet 1, the sealing agent 10 penetrates into the gaps between the adjacent groups of the electric wires w and the gaps between the groups of the electric wires w and the inner peripheral surface of the grommet 1. Because the viscosity of the sealing agent 10 is approximately 300 cps, the sealing agent 10 has a high flowability. That is, the sealing agent 10 penetrates into the gaps smoothly even though they are narrow, thus filling the gaps completely.

Because the groups of the electric wires w are tied into a bundle tightly with the tape 12 to minimize the gaps therebetween, it takes a considerable long period of time for the sealing agent 10 to reach the lower region of the grommet 1. Therefore, when the sealing agent 10 has reached the lower region of the grommet 1 after penetrating into the gaps, it has changed from a liquid into a gel, thus having a low degree of flowability. Accordingly, the sealing agent 10 is prevented from flowing downward from the grommet 1.

The sealing agent 10 filled in the gaps between the groups of the electric wires w and the gaps between the groups of the electric wires w and the inner peripheral surface of the grommet 1 gels in about five minutes and hardens completely in about 10 minutes.

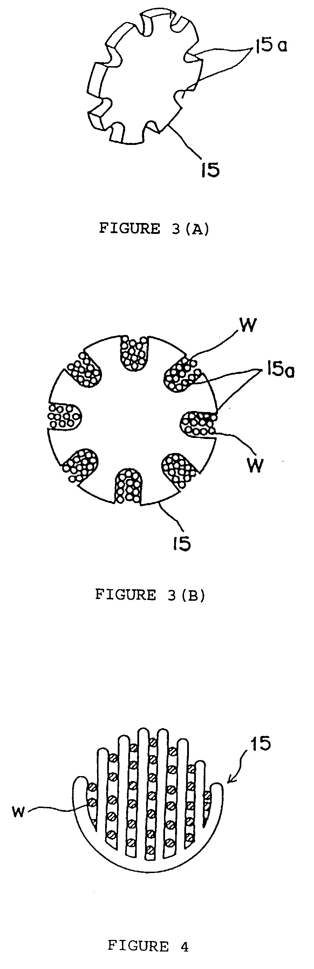

Figs. 2 and 3 show a second embodiment of the present invention, in which in the grommet 1' an intermediate-diameter cylindrical section 1d' is formed between a small-diameter section 1a' and a large-diameter section 1b' and a spacer 15 is installed in close contact with the inner peripheral surface of the intermediate-diameter cylindrical section 1d'. The spacer serves as a means for forming a large gap between adjacent groups of electric wires w of the wire harness W/H.

The spacer 15 is approximately disc-shaped in a front view and has a plurality of electric wire-insertion notches or concavities 15a formed on its circumferential surface at regular intervals. The plurality of groups of the electric wires w inserted through the electric wire-insertion concavities 15a of the spacer 15 are spaced at large intervals. A tape 12 is wound around the wire harness W/H after the spacer is installed, at both ends of the grommet in the wire direction. Consequently, the gaps between the adjacent groups of the electric wires w become gradually smaller from the spacer toward both ends of the grommet 1'.

The wire harness W/H held together with the spacer 15 is inserted into the grommet 1' and the spacer is brought into close contact with the inner peripheral surface of the intermediate-diameter cylindrical section 1d'.

The spacer 15 distributes the groups of the electric wires w in the circumferential direction of the spacer 15 at large regular intervals, irrespective of the number of the electric wires w. Thus, the sealing agent 10 can be reliably filled into the large gaps between the groups of the electric wires w. Thus, the wire harness W/H can be sealed reliably.

As shown in Fig. 4, it is possible to use a comb-shaped spacer 15 to insert the electric wires w into spaces between adjacent teeth of the spacer 15. In this manner, gaps can be formed between adjacent wires or adjacent groups of the wires w in the grommet 1.

As apparent from the foregoing description, according to the present invention, the viscosity of the sealing agent is set to be lower than that of the conventional one to enhance its flowability. Thus, the sealing agent is capable of reliably penetrating into all the gaps between adjacent groups of electric wires and the gaps between the groups of the electric wires and the inner peripheral surface of the grommet, thus reliably waterproofing the grommet-installing part of the wire harness.

Further, the sealing agent has a high flowability and hardens in a shorter period of time than the conventional one. Thus, there is no possibility that the sealing agent flows downward from the grommet-installing region. In addition, because the sealing agent hardens in a shorter period of time, it takes a short period of time to install the wire harness on the grommet.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention.

## Claims

1. A hardenable sealing agent for use in filling gaps between wires (w) or groups of wires (w) of a wire harness (W/H) and gaps between said wires or groups of wires and an interior surface of a grommet (1) into which the wires are inserted,
characterized in that said sealing agent is composed of two liquids which on mixing undergo reactive hardening, said two liquids being
a first liquid comprising a main reactive agent, at least one viscosity depressant and at least one hardening accelerator, and
a second liquid consisting essentially of a hardening agent which reacts with said main reactive agent to effect the reactive hardening,
said two liquids when mixed having initially a viscosity in the range 0.2 - 0.5 Pa.s (200 - 500 cps) and gelling in 3 to 7 minutes.

2. A hardenable sealing agent according to claim 1 wherein said first liquid consists essentially of
at least one polyether polyol as said main reactive agent,
triethanolamine and dibutyltin dilaurate as hardening accelerators,
at least one low-molecular weight aromatic hydrocarbon effective as viscosity depressant and
an antioxidant,
and said second liquid consists essentially of at least one polyisocyanate as said hardening agent,
the weight ratio of said first liquid to said second liquid being in the range 5.5 : 1 to 1 : 1.

3. A method of sealing an electrical wire harness (W/H) in an elastomeric grommet (1), comprising introducing a hardenable sealing agent in liquid form into said grommet so as to fill spaces in said grommet between wires (w), or groups of wires (w), of said wire harness and between said wires, or groups of wires, and an interior surface of said grommet, and allowing said sealing agent to undergo reactive hardening in situ,
characterized in that said sealing agent is obtained by mixing two liquids which on mixing undergo reactive hardening, said two liquids being
a first liquid comprising a main reactive agent, at least one viscosity depressant and at least one hardening accelerator, and
a second liquid consisting essentially of a hardening agent which reacts with said main reactive agent to effect the reactive hardening,
said two liquids when introduced into the grommet having initially a viscosity in the range 0.2 - 0.5 Pa.S (200 - 500 cps) and gelling in 3 to 7 minutes.

4. A method according to claim 3 wherein said first liquid consists essentially of
at least one polyether polyol as said main reactive agent,
triethanolamine and dibutyltin dilaurate as hardening accelerators,
at least one low-molecular weight aromatic hydrocarbon effective as viscosity depressant and
an antioxidant,
and said second liquid consists essentially of at least one polyisocyanate as said hardening agent,
the weight ratio of said first liquid to said second liquid being in the range 5.5 : 1 to 1 : 1.

5. A method according to claim 3 or 4 wherein a spacer (15) is provided inside said grommet to maintain said wires, or groups of wires, spaced apart so that there are gaps between said wires or groups thereof to receive said sealing agent.

6. A method according to claim 5 wherein said spacer is selected from (i) a disc (15) having concave portions (15a) at its periphery receiving groups of said wires and (ii) a comb-shaped member (15).

7. A method according to any one of claims 3 to 6 wherein said grommet has a first portion containing said wires, or groups of wires, spaced apart and a second portion of smaller diameter than said first portion and containing said wires in closely bundled form, the method including the step of, before pouring the sealing agent in, winding a tape around the second portion of the grommet and the wires projecting therefrom so as to fix the grommet to the wires at a predetermined location.

8. A sealing construction of a wire harness having a plurality of wires and an elastomeric grommet arranged on said wires at a location where said wires are bundled together, said grommet having an interior surface surrounding said wires containing a body of hardenable sealing agent hardened in situ in said grommet and filling gaps between said wires or groups of said wires and gaps between said wires or groups thereof and said interior surface of said sleeve portion, said hardenable sealing agent being one having initially a viscosity in the range 0.2 - 0.5 Pa.s (200 - 500 cps) and a gelling time of 3 to 7 minutes.

9. A sealing construction of a wire harness according to claim 8 wherein said grommet contains a spacer which maintains said wires, or groups thereof, spaced apart within said grommet at least prior to the hardening of the sealing agent.

10. A sealing construction of a wire harness having a plurality of wires and an elastomeric grommet arranged on said wires at a location where said wires are bundled together, said grommet having an interior surface surrounding said wires containing a body of hardenable sealing agent hardened in situ in said grommet and filling gaps between said wires or groups of said wires and gaps between said wires or groups thereof and said interior surface of said sleeve portion, said sealing agent being formed by mixing two liquids which on mixing undergo reactive hardening, said two liquids being
a first liquid a main reactive agent, at least one viscosity depressant and at least one hardening accelerator, and
a second liquid consisting essentially of a hardening agent which reacts with said main reactive agent to effect the reactive hardening,
introducing said liquids when mixed into said grommet containing said wires,
said two liquids when introduced into said grommet in mixed form having a viscosity in the range 0.2 - 0.5 Pa.s (200 - 500 cps) and a gelling time of 3 to 7 minutes.

11. A sealing construction of a wire harness according to claim 10 wherein said first liquid consists essentially of
at least one polyether polyol as said main reactive agent,
triethanolamine and dibutyltin dilaurate as hardening accelerators,
at least one low-molecular weight aromatic hydrocarbon effective as viscosity depressent and
an antioxidant;
and said second liquid consists essentially of at least one polyisocyanate as said hardening agent,
the weight ratio of said first liquid to said second liquid being in the range 5.5 : 1 to 1 : 1.

12. A sealing construction of a wire harness according to claim 10 or 11 wherein said grommet contains a spacer which maintains said wires, or groups thereof, spaced apart within said grommet at least prior to the hardening of the sealing agent.
